(19) Europäisches Patentamt
European Patent Office
Office européen des brevets

(11) **EP 2 893 630 B1**

(12) **FASCICULE DE BREVET EUROPEEN**

(45) Date de publication et mention de la délivrance du brevet:
**19.09.2018 Bulletin 2018/38**

(21) Numéro de dépôt: **13756552.9**

(22) Date de dépôt: **09.07.2013**

(51) Int Cl.:
*H02P 21/12* *(2016.01)*    *H02P 6/28* *(2016.01)*

(86) Numéro de dépôt international:
**PCT/FR2013/051635**

(87) Numéro de publication internationale:
**WO 2014/037635 (13.03.2014 Gazette 2014/11)**

(54) **PROCEDE DE COMMANDE D'UN MOTEUR A AIMANTS PERMANENTS ET SYSTEME CORRESPONDANT**

VERFAHREN ZUR STEUERUNG EINES PERMANENTMAGNETMOTORS UND ENTSPRECHENDES SYSTEM

METHOD OF CONTROLLING A PERMANENT MAGNET MOTOR AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2012 FR 1258211**

(43) Date de publication de la demande:
**15.07.2015 Bulletin 2015/29**

(73) Titulaire: **Renault S.A.S.**
**92100 Boulogne-Billancourt (FR)**

(72) Inventeur: **MALOUM, Abdelmalek**
**F-94550 Chevilly Larue (FR)**

(56) Documents cités:
**FR-A1- 2 960 358      JP-A- 2004 072 856**
**JP-A- 2012 120 297**

**Description**

La présente invention se rapporte de manière générale au domaine technique de la commande des moteurs électriques, et en particulier à la commande des moteurs électriques de type synchrone à aimant permanent.

Un moteur de type synchrone à aimant permanent comporte un rotor ayant un ou plusieurs aimants permanents, ainsi qu'un stator comportant des bobinages dans lesquels des courants déphasés les uns des autres circulent de manière à créer un champ magnétique tournant dans le moteur, entraînant le rotor en rotation. La fréquence de rotation du rotor étant égale à la fréquence des courants circulant dans le stator, le moteur, ou machine électrique, est dit « synchrone ».

Afin de contrôler le couple d'un tel moteur, un système de contrôle régule l'amplitude des courants circulant dans le stator, en appliquant à chacune des phases du stator une tension sinusoïdale appropriée. Afin de simplifier l'algorithme de contrôle du couple dans le système, on utilise généralement la transformée de Park pour projeter les courants et les tensions statoriques dans un repère tournant lié au rotor. Ainsi on détermine dans le repère de Park, les tensions statoriques à appliquer au stator pour que les courants statoriques correspondants produisent le couple souhaité. Ces tensions statoriques dans le repère de Park sont appelées signaux de commande. En faisant la transformée inverse de Park, le système de contrôle détermine ensuite les tensions sinusoïdales à appliquer aux différentes phases du stator pour obtenir le couple souhaité, dit couple de consigne.

Or l'utilisation de tels moteurs, par exemple comme moteurs de traction dans un véhicule électrique ou hybride, nécessite un contrôle du couple fiable, qui réponde vite en fonction des besoins en couple du conducteur, et qui restreint le couple dans un domaine de valeurs compatible avec la tension de la batterie de traction d'un tel véhicule. Lorsque le couple du moteur dépasse ce domaine de valeurs, le système de contrôle du moteur devient généralement instable, ce que l'on veut éviter.

Habituellement, on utilise des correcteurs dits Proportionnel Intégral ou PI pour réguler les courants du stator d'un tel moteur. Néanmoins, ces correcteurs présentent des problèmes d'instabilité notamment lorsqu'on veut avoir un système rapide. Pour y remédier, on calcule les paramètres de ces correcteurs afin d'assurer les marges de stabilité figurant dans le cahier des charges auquel doit obéir le moteur. Par ailleurs, les paramètres intrinsèques des moteurs à aimants permanents, tels que leur résistance interne ou leur inductance, variant d'un moteur à un autre, il est connu d'augmenter encore ces marges de stabilité et donc de diminuer encore les performances du correcteur, pour être en mesure d'utiliser un correcteur identique sur tous les moteurs d'une même série de véhicules.

Un autre exemple de correcteur n'utilisant pas de correcteur Proportionnel Intégral est divulgué dans le document EP0702451, qui propose une solution de contrôle en vitesse d'une machine synchrone à aimant permanent en réponse à des variations de charge du moteur. Une telle solution nécessite généralement un calibrage du gain du correcteur en fonction du régime de la machine, ou une compensation de termes de couplage statique qu'il faut pouvoir parfaitement mesurer.

Le document JP2012120297 propose, pour améliorer le suivi des consignes par le correcteur Proportionnel Intégral, d'appliquer celui-ci au moins sur les composantes fondamentales de l'erreur de courant exprimée dans un repère diphasé, et d'utiliser un correcteur Proportionnel Intégral séparé pour les composantes hautes fréquences de l'erreur de courant.

Un des buts de l'invention est de remédier à au moins une partie des inconvénients de la technique antérieure en fournissant un procédé de commande et un système de commande d'un groupe motopropulseur qui assurent un contrôle stable et robuste du couple d'un moteur à aimant permanent indépendamment de son régime, et qui utilisent des gains constants identiques pour une même série de moteurs produits à la chaîne.

A cette fin, l'invention propose un procédé de commande d'un groupe motopropulseur comportant un moteur électrique muni d'un rotor à aimants permanents et d'un stator, ledit procédé comportant une étape de régulation des courants du stator pour qu'ils atteignent des valeurs de courants de consigne grâce à des signaux de commande du moteur électrique, lesdits courants à réguler et lesdits signaux de commande étant exprimés dans un repère tournant comportant une pluralité d'axes, ledit procédé étant caractérisé en ce que ladite étape de régulation comporte pour chacun des axes de ladite pluralité d'axes une étape d'application sur le courant à réguler sur ledit axe d'un opérateur linéaire qui diffère en fonction de la valeur dudit courant à réguler par rapport à sa valeur de consigne, ladite étape d'application dudit opérateur linéaire fournissant une valeur de signal de commande sur ledit axe.

Grâce à l'invention, on utilise pour obtenir les signaux de commande du moteur, des opérateurs linéaires permettant de suivre les consignes de courant données, sans ajout de composante intégrale souvent génératrice d'instabilité dès que l'on souhaite un procédé de commande réactif. Le procédé de commande selon l'invention permet ainsi de contrôler le couple du moteur même à vitesse variable.

Selon une caractéristique du procédé de commande selon l'invention, ledit opérateur linéaire comporte:

-   un premier terme minimisant ou maximisant, en fonction de la valeur dudit courant à réguler par rapport à sa valeur de consigne, une composante d'ordre zéro d'un signal de commande estimé sur ledit axe en fonction desdits courants à réguler, de la vitesse dudit rotor et de valeurs limites de plages de valeurs estimant des caractéristiques dudit groupe motopropulseur,

- et un deuxième terme proportionnel audit courant à réguler sur ledit axe utilisant un facteur de convergence.

Ainsi on utilise les plages de variation connues des caractéristiques du groupe motopropulseur, assurant la robustesse du procédé de commande selon l'invention. L'utilisation de ces plages de variation connues ainsi que la formulation en deux parties de l'opérateur linéaire permettent de faire converger rapidement les courants à réguler vers leurs valeurs de consignes.

Selon une autre caractéristique avantageuse, lesdites plages de valeurs comportent au moins deux estimations choisies dans le groupe comportant:

- une estimation de la résistance équivalente du stator,
- une estimation d'une inductance du groupe motopropulseur sur un desdits axes,
- une estimation d'un flux généré par les aimants permanents du rotor.

L'utilisation de ces estimations permet de ne pas avoir à mesurer pour chaque groupe motopropulseur utilisant le procédé selon l'invention, ses caractéristiques intrinsèques que sont sa résistance interne, son inductance ou encore le flux généré par les aimants permanents du rotor. Ainsi l'invention est applicable sans modification à toute une série de groupes motopropulseurs fabriqués en série.

Le groupe motopropulseur est par exemple un groupe motopropulseur de véhicule électrique ou hybride présentant une invariance de ses caractéristiques intrinsèques par rotation d'un quart de tour.

Selon une autre caractéristique avantageuse, le procédé selon l'invention comporte une étape de lissage du signal de commande sur l'un desdits axes dès que la différence en valeur absolue entre le courant à réguler sur ledit axe et sa valeur de consigne est inférieure à un seuil prédéterminé.

Cette étape de lissage permet une mise en oeuvre facilitée du procédé selon l'invention par des actionneurs standards.

L'invention concerne aussi un système de commande d'un groupe motopropulseur comportant un moteur électrique muni d'un rotor à aimants permanents et d'un stator, ledit système comportant des moyens de régulation des courants du stator pour qu'ils atteignent des valeurs de courants de consigne grâce à des signaux de commande du moteur électrique, lesdits courants à réguler et lesdits signaux de commande étant exprimés dans un repère tournant comportant une pluralité d'axes, le système selon l'invention étant caractérisé en ce que lesdits moyens de régulation comportent pour chacun des axes de ladite pluralité d'axes des moyens d'application sur le courant à réguler sur ledit axe d'un opérateur linéaire qui diffère en fonction de la valeur dudit courant à réguler par rapport à sa valeur de consigne, lesdits moyens d'application dudit opérateur linéaire fournissant une valeur de signal de commande sur ledit axe.

Selon une caractéristique du système selon l'invention, ledit opérateur linéaire comporte :

- un premier terme minimisant ou maximisant, en fonction de la valeur dudit courant à réguler par rapport à sa valeur de consigne, une composante d'ordre zéro d'un signal de commande estimé sur ledit axe en fonction desdits courants à réguler, de la vitesse dudit rotor et de valeurs limites de plages de valeurs estimant des caractéristiques dudit groupe motopropulseur,
- et un deuxième terme proportionnel au courant à réguler sur ledit axe utilisant un facteur de convergence.

Selon une autre caractéristique avantageuse du système selon l'invention, lesdites plages de valeurs comportent au moins deux estimations choisies dans le groupe comportant:

- une estimation de la résistance équivalente du stator,
- une estimation d'une inductance du groupe motopropulseur sur un desdits axes,
- une estimation d'un flux généré par les aimants permanents du rotor.

Selon une autre caractéristique avantageuse du système selon l'invention, ledit système comporte en outre des moyens de lissage du signal de commande sur l'un desdits axes dès que la différence en valeur absolue entre le courant à réguler sur ledit axe et sa valeur de consigne est inférieure à un seuil prédéterminé.

L'invention concerne encore un programme d'ordinateur comportant des instructions pour mettre en oeuvre le procédé de commande selon l'invention, lorsque ledit programme est exécuté sur un ou plusieurs processeurs.

Le système de commande selon l'invention ainsi que le programme d'ordinateur selon l'invention présentent des avantages analogues à ceux du procédé de commande selon l'invention.

D'autres caractéristiques et avantages apparaîtront à la lecture d'un mode de réalisation préféré décrit en référence aux figures dans lesquelles :

- la figure 1 représente un moteur à aimants permanents
- la figure 2 représente des étapes du procédé de commande d'un groupe motopropulseur selon l'invention, dans ce mode de réalisation de l'invention,
- et la figure 3 représente un système de commande d'un groupe motopropulseur selon l'invention, dans ce mode de réalisation de l'invention.

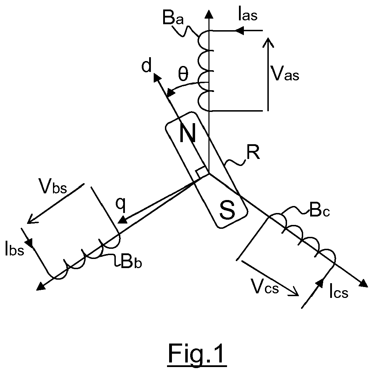

Selon un mode préféré de réalisation de l'invention, le procédé de commande selon l'invention est utilisé pour contrôler le couple d'un moteur à aimants permanents d'un groupe motopropulseur d'un véhicule électrique. Un tel moteur est schématiquement représenté sur la **figure 1,** avec pour simplifier une seule paire de pôles. En réalité le moteur pourra comprendre plusieurs paires de pôles, par exemple cinq paires de pôles.

Il comporte un stator bobiné suivant trois bobines Ba, Bb et Bc entourant un rotor R, ces trois bobines étant respectivement parcourues par des courants statoriques Ias, Ibs et Ics, sinusoïdaux et déphasés les uns des autres de $2\pi/3$ radians. Les tensions sinusoïdales statoriques correspondantes appliquées sur chaque bobine pour obtenir ces courants sont respectivement Vas, Vbs et Vcs.

Pour simplifier la commande de ce moteur, ces courants et tensions statoriques sont exprimées dans un repère tournant avec le rotor, d'axes polaire d et en quadrature q. L'axe polaire d est aligné dans la direction du pôle sud S au pôle nord N de l'aimant constituant le stator, et présente un angle de rotation $\theta$ avec la bobine Ba. La dérivée de l'angle $\theta$ divisée par le nombre de paires de pôles du rotor R donne la vitesse de rotation $\omega_r$ du champ magnétique du moteur à aimants permanents en rad/s.

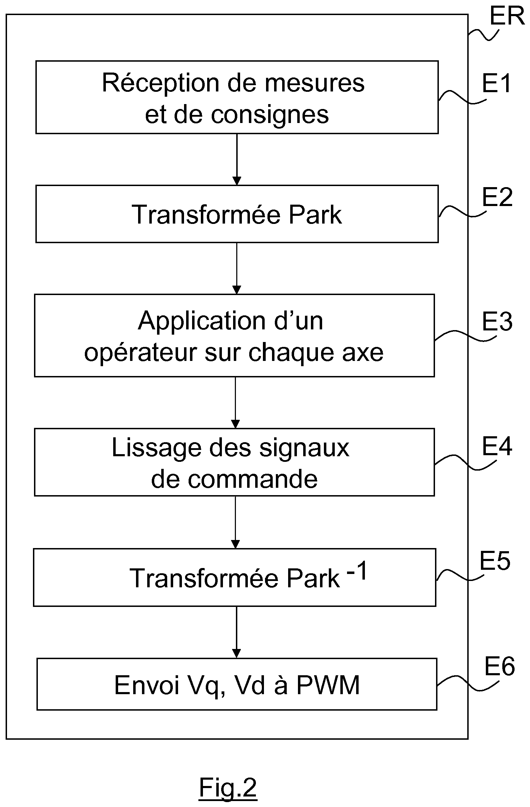

En référence à la **figure 2,** le procédé de commande selon l'invention est représenté sous la forme d'un algorithme comportant des étapes E1 à E6 d'une étape plus globale ER de régulation des courants statoriques pour obéir à un couple de consigne que doit fournir le moteur à aimants permanents.

Le procédé est mis en oeuvre dans un ou plusieurs calculateurs d'un groupe motopropulseur.

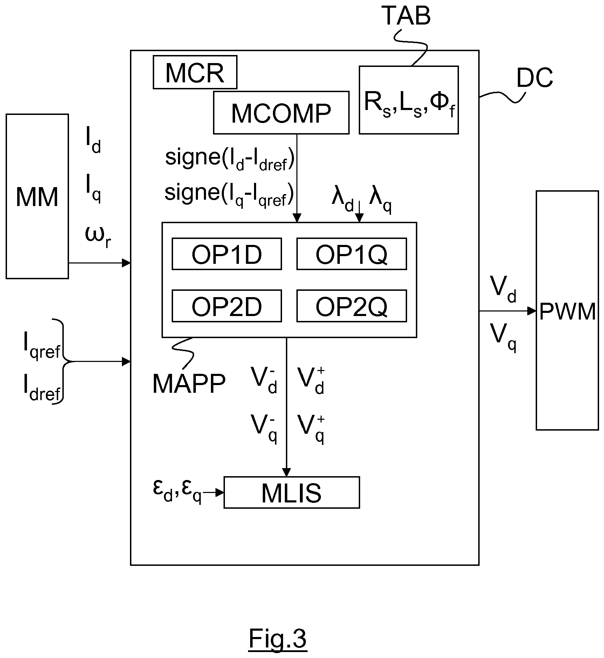

L'étape E1 est la réception par un dispositif de commande DC, représenté sur la **figure 3** qui représente un système de commande selon l'invention, de mesures des courants statoriques du moteur et de la vitesse de rotation $\omega_r$ du champ magnétique du moteur, fournies par des moyens de mesure MM. L'étape E1 comprend également la réception par le dispositif de commande DC, de courants statoriques de consigne, fournis par des tables, et correspondant au couple de consigne.

L'étape suivante E2 est la transformée de Park des courants statoriques mesurés et des courants statoriques de consigne reçus à l'étape E1, par les moyens de changement de repère MCR. En variante d'autres transformées que la transformée de Park-Concordia (souvent appelée transformée de Park) peuvent être utilisées, par exemple la transformée de Park-Clarke.

Les moyens de changement de repère MCR fournissent au dispositif de commande DC les valeurs :

- Id correspondant à la valeur du courant statorique mesuré sur l'axe d du repère de Park en Ampère,
- Iq correspondant à la valeur du courant statorique mesuré sur l'axe q du repère de Park en Ampère,
- Idref correspondant à la consigne du courant statorique sur l'axe d du repère de Park en Ampère,
- et Iqref correspondant à la valeur du courant statorique sur l'axe q du repère de Park en Ampère.

Il est à noter que pour simplifier la **figure 3,** sur celle-ci le dispositif de commande DC reçoit directement les valeurs de courants exprimés dans le repère de Park.

L'étape suivante E3 est l'application sur les courants statoriques Id et Iq mesurés et qui sont à réguler, d'un opérateur linéaire sur chacun des axes du repère de Park, qui diffère en fonction de la valeur du courant à réguler sur cet axe par rapport à sa valeur de consigne. Cette étape E3 se base sur la théorie présentée ci-après.

Les signaux de commande du moteur s'expriment sous la forme :

$$V_d = R_s I_d + L_d \dot{I}_d - \omega_r p L_q I_q \qquad \text{(Eq.1)}$$
$$V_q = R_s I_q + L_q \dot{I}_q + \omega_r p \left( L_d I_d + \Phi_f \right)$$

Où

- $V_d$ et $V_q$ sont les tensions statoriques sur respectivement les axes d et q du repère de Park, en Volt,
- $R_s$ représente la résistance équivalente du stator du moteur, en Ohm,
- $L_d$ et $L_q$ sont les inductances sur chaque axe d et q du repère de Park, en Henry,
- $\Phi_f$ représente le flux généré par les aimants du rotor, en Wb,

- et l'opérateur $\dot{x}$ est l'opérateur dérivée la variable x.

L'objectif est d'atteindre le couple de consigne en dépit de la présence du couplage entre l'axe d et l'axe q (à régime nul, pas de couplage voir Eq.1) et de la méconnaissance des valeurs exactes du flux $\Phi_f$, des inductances $L_d$ et $L_q$, et de la résistance $R_s$. Le couple fournit par le moteur s'exprime sous la forme:

$$C_{em} = \frac{3}{2} p \left( \Phi_d I_q - \Phi_q I_d \right) \qquad (Eq.2)$$

Où

- $C_{em}$ est le couple électromagnétique généré par le moteur,
- p est le nombre de paires de pôles du rotor,
- et $\Phi_d$ et $\Phi_q$ représentent les flux générés sur les axes d et q du repère de Park. Plus précisément :

$$\Phi_d = L_d I_d + \Phi_f \text{ et } \Phi_q = L_q I_q \text{ (Eq. 3)}$$

En général les moteurs à aimants permanents possèdent une symétrie parfaite entre les axes d et q ce qui signifie que l'on peut poser :

$$L_d = L_q = L_s \text{ (Eq. 4)}$$

et donc en combinant (2) et (3), le couple fournit par le moteur s'écrit :

$$C_{em} = \frac{3}{2} p \Phi_f I_q \text{ (Eq. 5)}$$

Ainsi pour contrôler le couple en limitant au maximum les pertes, il faut s'arranger pour avoir un courant statorique $I_d$ sur l'axe d le plus proche de zéro. Pour réaliser le couple de consigne, on réalise alors un courant statorique $I_q$ sur l'axe q et un courant statorique $I_d$ nul sur l'axe d afin d'obtenir la plus faible amplitude des courants pour ce couple et donc le minimum de pertes fer.

On dispose par ailleurs, dans le dispositif de commande DC, d'une table TAB comportant des plages de variations possibles ou plages de valeurs pour chaque paramètre $R_s$, $\Phi_f$ et $L_s$ :

$$R_s \in \left[ R_{s\,min} \; ; R_{s\,max} \; \right], \; L_s \in \left[ L_{s\,min} ; L_{s\,max} \right] \text{ et } \Phi_f \in \left[ \Phi_{f\,min} ; \Phi_{f\,max} \right],$$

chacune des valeurs minimales ou maximales dans ces intervalles tenant compte des variations des courants et des dispersions possibles dues à la fabrication en série du moteur à aimants permanents que l'on commande selon l'invention. En variante, la table TAB comporte seulement une ou deux plages de valeurs correspondant à un ou deux paramètres choisis entre $R_s$, $\Phi_f$ et $L_s$, ainsi qu'une valeur estimée, par exemple une valeur moyenne, pour chaque paramètre n'ayant pas de plage de valeurs.

On revient maintenant à la description de l'étape E3. Dans cette étape E3, des moyens de comparaison MCOMP du dispositif de commande DC comparent d'abord les courants statoriques mesurés Id et Iq par rapport à leurs valeurs de consignes Idref et Iqref. En fonction du signe de la différence entre chacun de ces courants à réguler et sa valeur de consigne, fourni par les moyens de comparaison MCOMP, un moyen d'application MAPP applique à chacun de ces courants un opérateur linéaire, fournissant ainsi deux valeurs possibles de tensions statoriques sur chacun des axes d et q en fonction de ce signe. Ainsi :

- Si Id ≥ Idref, on applique au courant Id l'opérateur linéaire OP1D et on obtient une tension statorique :

$$V_d^+ = \min \left( R_s I_d - \omega_r p L_s I_q \right) - \lambda_d L_{s\,max} \left( I_d - I_{dref} \right)$$

Où min (x) est l'opérateur minimum de la variable x et $\lambda_d$ est un coefficient positif qui sert de facteur de convergence. En effet plus ce coefficient est faible, plus le courant Id convergera lentement vers sa valeur de consigne Idref.

Le terme min$(R_s I_d - \omega_r p L_s I_q)$ minimise une composante d'ordre zéro du signal de commande Vd, en prenant, pour la résistance $R_s$ la valeur minimale $R_{s\,min}$ de sa plage de valeurs si le courant Id est positif, ou sa valeur maximale $R_{s\,max}$ si le courant Id est négatif, et pour l'inductance $L_s$, la valeur maximale $L_{s\,max}$ de sa plage de valeurs si le courant Iq est positif, ou sa valeur minimale $L_{s\,min}$ si le courant Iq est négatif. - Si Id < Idref, on applique au courant Id l'opérateur linéaire OP2D et on obtient une tension statorique :

$$V_d^- = \max\left(R_s I_d - \omega_r p L_s I_q\right) - \lambda_d L_{s\,max}\left(I_d - I_{dref}\right)$$

Où max(x) est l'opérateur maximum de la variable x, et le terme max$(R_s I_d - \omega_r p L_s I_q)$ maximise une composante d'ordre zéro du signal de commande Vd, en choisissant pour $R_s$ et $L_s$ les limites adéquates des plages de valeurs correspondantes, de façon similaire au cas où Id ≥ Idref.

- De manière similaire, si Iq ≥ Iqref, on applique au courant Iq l'opérateur linéaire OP1Q et on obtient une tension statorique :

$$V_q^+ = \min\left(R_s I_q + \omega_r p L_s I_d + \omega_r p \Phi_f\right) - \lambda_q L_{s\,max}\left(I_q - I_{qref}\right)$$

Où $\lambda_q$ est un coefficient positif qui sert de facteur de convergence. En effet plus ce coefficient est faible, plus le courant Iq convergera lentement vers sa valeur de consigne Iqref.

Le terme min$(R_s I_q + \omega_r p L_s I_d + \omega_r p \Phi_f)$ minimise une composante d'ordre zéro du signal de commande Vq, en choisissant pour $R_s$, $L_s$ et $\Phi_f$ les limites adéquates des plages de valeurs correspondantes, comme pour les opérateurs précédents.

- Enfin si Iq < Iqref, on applique au courant Iq l'opérateur linéaire OP2Q et on obtient une tension statorique :

$$V_q^- = \max\left(R_s I_q + \omega_r p L_s I_d + \omega_r p \Phi_f\right) - \lambda_q L_{s\,max}\left(I_q - I_{qref}\right)$$

Le terme max$(R_s I_q + \omega_r p L_s I_d + \omega_r p \Phi_f)$ maximise une composante d'ordre zéro du signal de commande Vq, en choisissant pour $R_s$, $L_s$ et $\Phi_f$ les limites adéquates des plages de valeurs correspondantes, comme pour les opérateurs précédents.

L'application de ces opérateurs linéaires sur les courants statoriques Id et Iq mesurés, dans cette étape E3, permet de faire converger ces courants vers leurs consignes respectives. En effet l'équation (Eq.1) combinée aux équations définissant les tensions statoriques $V_d^+$, $V_d^-$, $V_q^+$ et $V_q^-$ permet d'obtenir un signe de la dérivée du courant Id positif si Id < Idref et négatif si Id ≥ Idref, et également d'avoir un signe de la dérivée du courant Iq positif si Iq < Iqref et négatif si Iq ≥ Iqref.

L'étape suivante E4 est le lissage de la tension statorique $V_d$ qui switch entre $V_d^+$ et $V_d^-$, obtenue à l'étape E3, qui a lieu dès que la différence en valeur absolue entre le courant Id et sa valeur de consigne Idref est inférieure à un seuil prédéterminé $\varepsilon_d$, et le lissage de la tension statorique $V_q$ qui switch entre $V_q^+$ et $V_q^-$, obtenue à l'étape E3, qui a lieu dès que la différence en valeur absolue entre le courant Iq et sa valeur de consigne Iqref est inférieure à un seuil prédéterminé $\varepsilon_q$.

Ainsi les signaux de commande Vd et Vq à la fin de l'étape E4 valent :

$$V_d = \begin{cases} V_d^+ & \text{si} \quad I_d - I_{dref} > \varepsilon_d \\ V_d^- & \text{si} \quad I_d - I_{dref} < -\varepsilon_d \\ \left(\left(I_d - I_{dref} + \varepsilon_d\right)V_d^+ - \left(I_d - I_{dref} - \varepsilon_d\right)V_d^-\right)/2*\varepsilon_d & \text{si} \quad \left|I_d - I_{dref}\right| \le \varepsilon_d \end{cases}$$

$$V_q = \begin{cases} V_q^+ & \text{si} \quad I_q - I_{qref} > \varepsilon_q \\ V_q^- & \text{si} \quad I_q - I_{qref} < -\varepsilon_q \\ \left( \left( I_q - I_{qref} + \varepsilon_q \right) V_q^+ - \left( I_q - I_{qref} - \varepsilon_q \right) V_q^- \right) / 2 * \varepsilon_q & \text{si} \quad \left| I_q - I_{qref} \right| \leq \varepsilon_q \end{cases}$$

Cette étape E4 de lissage par interpolation linéaire est effectuée par les moyens de lissage MLIS. Elle est nécessaire lorsque les courants statoriques sont assez proches de leurs consignes respectives, afin que ces courants n'oscillent pas autour de leurs consignes à la fréquence du calculateur qui implémente le procédé de commande selon l'invention.

Les paramètres $\lambda_d$, $\lambda_q$, $\varepsilon_d$ et $\varepsilon_q$ sont déterminés après une étape de calibrage, préalable à l'utilisation du procédé de commande selon l'invention, en tenant compte du cahier des charges et de façon à assurer la robustesse du procédé selon l'invention.

L'étape suivante E5 est la détermination des signaux de commande Vd et Vq dans un système triphasé, par les moyens MCR de changement de repère, qui effectuent sur ces signaux la transformée inverse de Park.

Enfin l'étape E6 est l'envoi, par le dispositif de commande DC, des signaux de commande exprimés dans ce système triphasé, à un onduleur PWM qui réalise ces signaux et les envoie au moteur à aimants permanents pour réaliser le couple demandé.

Il est à noter que pour simplifier la **figure 3,** sur celle-ci l'onduleur PWM reçoit directement les signaux de commande exprimés dans le repère de Park.

Le procédé de commande selon l'invention assure ainsi la bonne variation du courant sans utiliser de terme intégral pouvant diverger en cas de grosse erreur sur un paramètre. Il faut bien entendu estimer la plage de variation des paramètres pour assurer le fonctionnement de la commande.

Cette stratégie de régulation offre l'avantage de toujours faire varier les courants dans la direction de la consigne tant que les paramètres réels du moteur sont dans la plage que l'on a choisie. On assure donc une plus grande stabilité qu'avec des régulateurs classiques qui ne tiennent pas compte des dispersions des paramètres. De plus, la régulation est plus rapide car elle tient toujours compte des pires cas. Il n'est plus nécessaire d'estimer les paramètres moyens mais de donner des bornes à ceux-ci, ce qui est beaucoup plus simple.

Il est à noter que dans ce mode de réalisation de l'invention, le moteur possède une symétrie entre les axes d et q ce qui simplifie l'expression des signaux de commande de la machine, mais ce mode de réalisation est aisément transposable par l'Homme du métier au cas où le moteur est asymétrique entre les axes d et q. De même dans une variante de réalisation de l'invention, le moteur à aimants permanents est du type asynchrone.

## Revendications

1. Procédé de commande d'un groupe motopropulseur comportant un moteur électrique muni d'un rotor (R) à aimants permanents et d'un stator, ledit procédé comportant une étape de régulation (ER) des courants (Id, Iq) du stator pour qu'ils atteignent des valeurs de courants de consigne (Idref, Iqref) grâce à des signaux de commande (Vd, Vq) du moteur électrique, lesdits courants à réguler (Id, Iq) et lesdits signaux de commande (Vd, Vq) étant exprimés dans un repère tournant comportant une pluralité d'axes (d,q), **caractérisé en ce que** ladite étape de régulation (ER) comporte pour chacun des axes (d,q) de ladite pluralité d'axes une étape d'application (E3) sur le courant à réguler (Id, Iq) sur ledit axe d'un opérateur linéaire (OP1D, OP2D, OP1Q, OP2Q) qui diffère en fonction de la valeur dudit courant à réguler (Id, Iq) par rapport à sa valeur de consigne (Idref, Iqref), ladite étape d'application dudit opérateur linéaire fournissant une valeur de signal de commande (Vd, Vq) sur ledit axe, ledit opérateur linéaire (OP1D, OP2D, OP1Q, OP2Q) comportant:

   - un premier terme minimisant ou maximisant, en fonction de la valeur dudit courant à réguler (Id, Iq) par rapport à sa valeur de consigne (Idref, Iqref), une composante d'ordre zéro d'un signal de commande estimé sur ledit axe en fonction desdits courants à réguler (Id, Iq), de la vitesse ($\omega_r$) dudit rotor et de valeurs limites ($R_{smin}$, $R_{smax}$, $L_{smin}$, $L_{smax}$, $\Phi_{fmin}$, $\Phi_{fmax}$) de plages de valeurs estimant des caractéristiques du groupe motopropulseur,
   - et un deuxième terme proportionnel audit courant à réguler (Id, Iq) sur ledit axe (d, q) utilisant un facteur de convergence ($\lambda_d$, $\lambda_q$).

2. Procédé de commande selon la revendication 1, **caractérisé en ce que** lesdites plages de valeurs comportent au moins deux estimations choisies dans le groupe comportant:

- une estimation de la résistance équivalente ($R_s$) du stator,
- une estimation d'une inductance ($L_s$) du groupe motopropulseur sur un desdits axes (d,q),
- une estimation d'un flux ($\Phi_f$) généré par les aimants permanents du rotor (R).

**3.** Procédé de commande selon la revendication 1 ou 2, **caractérisé en ce qu'**il comporte une étape de lissage (E4) du signal de commande (Vd, Vq) d'un desdits axes (d,q) dès que la différence en valeur absolue entre le courant à réguler (Id, Iq) sur ledit axe et sa valeur de consigne (Idref, Iqref) est inférieure à un seuil prédéterminé ($\varepsilon_d$, $\varepsilon_q$).

**4.** Procédé de commande selon l'une quelconque des revendications 1 à 3, dans lequel le groupe motopropulseur est un groupe motopropulseur de véhicule électrique ou hybride présentant une invariance de ses caractéristiques intrinsèques par rotation d'un quart de tour.

**5.** Système de commande d'un groupe motopropulseur comportant un moteur électrique muni d'un rotor (R) à aimants permanents et d'un stator, ledit système comportant des moyens de régulation des courants (Id, Iq) du stator pour qu'ils atteignent des valeurs de courants de consigne (Idref, Iqref) grâce à des signaux de commande (Vd, Vq) du moteur électrique, lesdits courants à réguler (Id, Iq) et lesdits signaux de commande (Vd, Vq) étant exprimés dans un repère tournant comportant une pluralité d'axes (d, q),
**caractérisé en ce que** lesdits moyens de régulation comportent pour chacun des axes (d,q) de ladite pluralité d'axes des moyens d'application (MAPP) sur le courant à réguler (Id, Iq) sur ledit axe d'un opérateur linéaire (OP1D, OP2D, OP1Q, OP2Q) qui diffère en fonction de la valeur dudit courant à réguler (Id, Iq) par rapport à sa valeur de consigne (Idref, Iqref), lesdits moyens d'application dudit opérateur linéaire fournissant une valeur de signal de commande (Vd, Vq) sur ledit axe, ledit opérateur linéaire (OP1D, OP2D, OP1Q, OP2Q) comportant:

- un premier terme minimisant ou maximisant, en fonction de la valeur dudit courant à réguler (Id, Iq) par rapport à sa valeur de consigne (Idref, Iqref), une composante d'ordre zéro d'un signal de commande (Vd, Vq) estimé sur ledit axe en fonction desdits courants à réguler (Id, Iq), de la vitesse ($\omega_r$) dudit rotor et de valeurs limites ($R_{smin}$, $R_{smax}$, $L_{smin}$, $L_{smax}$, $\Phi_{fmin}$, $\Phi_{fmax}$) de plages de valeurs estimant des caractéristiques dudit groupe motopropulseur,
- et un deuxième terme proportionnel au courant à réguler (Id, Iq) sur ledit axe (d,q) utilisant un facteur de convergence ($\lambda_d$, $\lambda_q$).

**6.** Système de commande d'un groupe motopropulseur selon la revendication 5, **caractérisé en ce que** lesdites plages de valeurs comportent au moins deux estimations choisies dans le groupe comportant:

- une estimation de la résistance équivalente ($R_s$) du stator,
- une estimation d'une inductance ($L_s$) du groupe motopropulseur sur un desdits axes (d,q),
- une estimation d'un flux ($\Phi_f$) généré par les aimants permanents du rotor (R).

**7.** Système de commande d'un groupe motopropulseur selon la revendication 6, **caractérisé en ce qu'**il comporte en outre des moyens de lissage (MLIS) du signal de commande (Vd, Vq) sur l'un desdits axes dès que la différence en valeur absolue entre le courant à réguler (Id, Iq) sur ledit axe et sa valeur de consigne (Idref, Iqref) est inférieure à un seuil prédéterminé ($\varepsilon_d$, $\varepsilon_q$).

**8.** Programme d'ordinateur, **caractérisé en ce qu'**il comporte des instructions pour mettre en oeuvre le procédé selon l'une quelconque des revendications 1 à 4, lorsqu'il est exécuté sur un ou plusieurs processeurs.

**Patentansprüche**

**1.** Steuerverfahren einer Antriebseinheit, die einen Elektromotor aufweist, der mit einem Rotor (R) mit Dauermagneten und mit einem Stator versehen ist, wobei das Verfahren einen Regelungsschritt (ER) der Ströme (Id, Iq) des Stators aufweist, damit sie mit Hilfe von Steuersignalen (Vd, Vq) des Elektromotors Sollstromwerte (Idref, Iqref) erreichen, wobei die zu regelnden Ströme (Id, Iq) und die Steuersignale (Vd, Vq) in einem drehenden Bezugssystem ausgedrückt werden, das eine Vielzahl von Achsen (d, q) aufweist,
**dadurch gekennzeichnet, dass** der Regelungsschritt (ER) für jede der Achsen (d, q) der Vielzahl von Achsen einen Schritt der Anwendung (E3) eines linearen Operators (OP1D, OP2D, OP1Q, OP2Q) auf den zu regelnden Strom (Id, Iq) auf der Achse aufweist, der sich abhängig vom Wert des zu regelnden Stroms (Id, Iq) bezüglich seines Sollwerts (Idref, Iqref) unterscheidet, wobei der Anwendungsschritt des linearen Operators einen Steuersignalwert (Vd, Vq) auf der Achse liefert, wobei der lineare Operator (OP1D, OP2D, OP1Q, OP2Q) aufweist:

- einen ersten Term, der abhängig vom Wert des zu regelnden Stroms (Id, Iq) bezüglich seines Sollwerts (Idref, Iqref) eine Komponente der Nullordnung eines geschätzten Steuersignals auf der Achse abhängig von den zu regelnden Strömen (Id, Iq), der Geschwindigkeit ($\omega_r$) des Rotors und Grenzwerten ($R_{smin}$, $R_{smax}$, $L_{smin}$, $L_{smax}$, $\Phi_{fmin}$, $\Phi_{fmax}$) von Wertebereichen, die Merkmale der Antriebseinheit schätzen, minimiert oder maximiert,
- und einen zweiten Term proportional zum zu regelnden Strom (Id, Iq) auf der Achse (d, q), der einen Konvergenzfaktor ($\lambda_d$, $\lambda_q$) verwendet.

2. Steuerverfahren nach Anspruch 1, **dadurch gekennzeichnet, dass** die Wertebereiche mindestens zwei Schätzungen aufweisen, die aus der Gruppe ausgewählt werden, die aufweist:

- eine Schätzung des Wirkwiderstands ($R_s$) des Stators,
- eine Schätzung einer Induktivität ($L_s$) der Antriebseinheit auf einer der Achsen (d, q),
- eine Schätzung eines von den Dauermagneten des Rotors (R) erzeugten Flusses ($\Phi_f$).

3. Steuerverfahren nach Anspruch 1 oder 2, **dadurch gekennzeichnet, dass** es einen Glättungsschritt (E4) des Steuersignals (Vd, Vq) einer der Achsen (d, q) aufweist, sobald der Unterschied des Absolutwerts zwischen dem zu regelnden Strom (Id, Iq) auf der Achse und seinem Sollwert (Idref, Iqref) geringer als eine vorbestimmte Schwelle ($\varepsilon_d$, $\varepsilon_q$) ist.

4. Steuerverfahren nach einem der Ansprüche 1 bis 3, wobei die Antriebseinheit eine Antriebseinheit eines Elektro- oder Hybridfahrzeugs ist, die eine Vierteldrehung-Rotationsinvarianz ihrer intrinsischen Eigenschaften aufweist.

5. Steuersystem einer Antriebseinheit, die einen mit einem Rotor (R) mit Dauermagneten und mit einem Stator versehenen Elektromotor aufweist, wobei das System Regelungseinrichtungen der Ströme (Id, Iq) des Stators aufweist, damit sie Sollstromwerte (Idref, Iqref) mit Hilfe von Steuersignalen (Vd, Vq) des Elektromotors erreichen, wobei die zu regelnden Ströme (Id, Iq) und die Steuersignale (Vd, Vq) in einem drehenden Bezugssystem ausgedrückt werden, das eine Vielzahl von Achsen (d, q) aufweist,

**dadurch gekennzeichnet, dass** die Regelungseinrichtungen für jede der Achsen (d, q) der Vielzahl von Achsen Anwendungseinrichtungen (MAPP) eines linearen Operators (OP1D, OP2D, OP1Q, OP2Q) auf den zu regelnden Strom (Id, Iq) auf der Achse aufweisen, der sich abhängig vom Wert des zu regelnden Stroms (Id, Iq) bezüglich seines Sollwerts (Idref, Iqref) unterscheidet, wobei die Anwendungseinrichtungen des linearen Operators einen Steuersignalwert (Vd, Vq) auf der Achse liefern, wobei der lineare Operator (OP1D, OP2D, OP1Q, OP2Q) aufweist:

- einen ersten Term, der abhängig vom Wert des zu regelnden Stroms (Id, Iq) bezüglich seines Sollwerts (Idref, Iqref) eine Komponente der Nullordnung eines geschätzten Steuersignals (Vd, Vq) auf der Achse abhängig von den zu regelnden Strömen (Id, Iq), der Geschwindigkeit ($\omega_r$) des Rotors und Grenzwerten ($R_{smin}$, $R_{smax}$, $L_{smin}$, $L_{smax}$, $\Phi_{fmin}$, $\Phi_{fmax}$) von Wertebereichen, die Merkmale der Antriebseinheit schätzen, minimiert oder maximiert,
- und einen zweiten Term proportional zum zu regelnden Strom (Id, Iq) auf der Achse (d, q), der einen Konvergenzfaktor ($\lambda_d$, $\lambda_q$) verwendet.

6. Steuersystem einer Antriebseinheit nach Anspruch 5, **dadurch gekennzeichnet, dass** die Wertebereiche mindestens zwei Schätzungen aufweisen, die aus der Gruppe ausgewählt werden, die aufweist:

- eine Schätzung des Wirkwiderstands ($R_s$) des Stators,
- eine Schätzung einer Induktivität ($L_s$) der Antriebseinheit auf einer der Achsen (d, q),
- eine Schätzung eines von den Dauermagneten des Rotors (R) erzeugten Flusses ($\Phi_f$).

7. Steuersystem einer Antriebseinheit nach Anspruch 6, **dadurch gekennzeichnet, dass** sie außerdem Glättungseinrichtungen (MLIS) des Steuersignals (Vd, Vq) auf einer der Achsen aufweist, sobald der Unterschied des Absolutwerts zwischen dem zu regelnden Strom (Id, Iq) auf der Achse und seinem Sollwert (Idref, Iqref) geringer als eine vorbestimmte Schwelle ($\varepsilon_d$, $\varepsilon_q$) ist.

8. Computerprogramm, **dadurch gekennzeichnet, dass** es Anweisungen aufweist, um das Verfahren nach einem der Ansprüche 1 bis 4 durchzuführen, wenn es auf einem oder mehreren Prozessoren ausgeführt wird.

**Claims**

1.  Method for controlling a motor propulsion unit comprising an electric motor equipped with a permanent magnet rotor (R) and a stator, said method comprising a step (ER) of regulating the currents (Id, Iq) of the stator so that they attain setpoint current values (Idref, Iqref) by virtue of control signals (Vd, Vq) of the electric motor, said currents to be regulated (Id, Iq) and said control signals (Vd, Vq) being expressed in a rotating reference frame comprising a plurality of axes (d, q),
    **characterized in that** said regulation step (ER) comprises for each of the axes (d, q) of said plurality of axes a step (E3) of applying, to the current to be regulated (Id, Iq) on said axis, a linear operator (OP1D, OP2D, OP1Q, OP2Q) that differs as a function of the value of said current to be regulated (Id, Iq) with respect to the setpoint value thereof (Idref, Iqref), said step of application of said linear operator providing a control signal value (Vd, Vq) on said axis, said linear operator (OP1D, OP2D, OP1Q, OP2Q) comprising:

    - a first term minimizing or maximizing, as a function of the value of said current to be regulated (Id, Iq) with respect to the setpoint value thereof (Idref, Iqref), a zero-order component of a control signal estimated on said axis as a function of said currents to be regulated (Id, Iq), of the speed ($\omega_r$) of said rotor, and of limit values ($R_{smin}$, $R_{smax}$, $L_{smin}$, $L_{smax}$, $\Phi_{fmin}$, $\Phi_{max}$) of value ranges estimating features of said motor propulsion unit,
    - and a second term proportional to said current to be regulated (Id, Iq) on said axis (d, q) using a convergence factor ($\lambda_d$, $\lambda_q$).

2.  Control method according to Claim 1, **characterized in that** said value ranges comprise at least two estimations selected from the group comprising:

    - an estimation of the equivalent resistance ($R_s$) of the stator,
    - an estimation of an inductance ($L_s$) of the motor propulsion unit on one of said axes (d, q),
    - an estimation of a flux ($\Phi_f$) generated by the permanent magnets of the rotor (R).

3.  Control method according to Claim 1 or 2, **characterized in that** it comprises a step (E4) of smoothing of the control signal (Vd, Vq) on one of said axes (d, q) as soon as the difference in absolute value between the current to be regulated (Id, Iq) on said axis and the setpoint value thereof (Idref, Iqref) is below a predetermined threshold ($\varepsilon_d$, $\varepsilon_q$).

4.  Control method according to any one of Claims 1 to 3, wherein the motor propulsion unit is a motor propulsion unit of an electric or hybrid vehicle having an invariance of the intrinsic features thereof through rotation of a quarter turn.

5.  System for controlling a motor propulsion unit comprising an electric motor equipped with a permanent magnet rotor (R) and a stator, said system comprising means for regulating the currents (Id, Iq) of the stator so that they attain setpoint current values (Idref, Iqref) by virtue of control signals (Vd, Vq) of the electric motor, said currents to be regulated (Id, Iq) and said control signals (Vd, Vq) being expressed in a rotating reference frame comprising a plurality of axes (d, q),
    **characterized in that** said regulation means comprise for each of the axes (d, q) of said plurality of axes means (MAPP) for applying, to the current to be regulated (Id, Iq) on said axis, a linear operator (OP1D, OP2D, OP1Q, OP2Q) that differs as a function of the value of said current to be regulated (Id, Iq) with respect to the setpoint value thereof (Idref, Iqref), said means for applying said linear operator providing a control signal value (Vd, Vq) on said axis, said linear operator (OP1D, OP2D, OP1Q, OP2Q) comprising:

    - a first term minimizing or maximizing, as a function of the value of said current to be regulated (Id, Iq) with respect to the setpoint value thereof (Idref, Iqref), a zero-order component of a control signal (Vd, Vq) estimated on said axis as a function of said currents to be regulated (Id, Iq), of the speed ($\omega_r$) of said rotor, and of limit values ($R_{smin}$, $R_{smax}$, $L_{smin}$, $L_{smax}$, $\Phi_{fmin}$, $\Phi_{fmax}$) of value ranges estimating features of said motor propulsion unit,
    - and a second term proportional to the current to be regulated (Id, Iq) on said axis (d, q) using a convergence factor ($\lambda_d$, $\lambda_q$).

6.  System for controlling a motor propulsion unit according to Claim 5, **characterized in that** said value ranges comprise at least two estimations selected from the group comprising:

    - an estimation of the equivalent resistance ($R_s$) of the stator,
    - an estimation of an inductance ($L_s$) of the motor propulsion unit on one of said axes (d, q),
    - an estimation of a flux ($\Phi_f$) generated by the permanent magnets of the rotor (R).

7. System for controlling a motor propulsion unit according to Claim 6, **characterized in that** it also comprises means (MLIS) for smoothing the control signal (Vd, Vq) on one of said axes (d, q) as soon as the difference in absolute value between the current to be regulated (Id, Iq) on said axis and the setpoint value thereof (Idref, Iqref) is below a predetermined threshold ($\varepsilon_d$, $\varepsilon_q$).

8. Computer program, **characterized in that** it comprises instructions for implementing the method according to any one of Claims 1 to 4 when said program is run on one or more processors.

Fig.1

```
┌──────────────────────────────────────────────┐  ER
│                                                │
│   ┌──────────────────────────────────────┐     │  E1
│   │      Réception de mesures            │     │
│   │        et de consignes               │     │
│   └──────────────────────────────────────┘     │
│                     │                           │
│                     ▼                           │
│   ┌──────────────────────────────────────┐     │  E2
│   │        Transformée Park              │     │
│   └──────────────────────────────────────┘     │
│                     │                           │
│                     ▼                           │
│   ┌──────────────────────────────────────┐     │  E3
│   │        Application d'un              │     │
│   │    opérateur sur chaque axe          │     │
│   └──────────────────────────────────────┘     │
│                     │                           │
│                     ▼                           │
│   ┌──────────────────────────────────────┐     │  E4
│   │       Lissage des signaux            │     │
│   │         de commande                  │     │
│   └──────────────────────────────────────┘     │
│                     │                           │
│                     ▼                           │
│   ┌──────────────────────────────────────┐     │  E5
│   │     Transformée Park ⁻¹              │     │
│   └──────────────────────────────────────┘     │
│                     │                           │
│                     ▼                           │
│   ┌──────────────────────────────────────┐     │  E6
│   │      Envoi Vq, Vd à PWM              │     │
│   └──────────────────────────────────────┘     │
│                                                │
└──────────────────────────────────────────────┘
```

Réception de mesures et de consignes — E1

Transformée Park — E2

Application d'un opérateur sur chaque axe — E3

Lissage des signaux de commande — E4

Transformée Park $^{-1}$ — E5

Envoi Vq, Vd à PWM — E6

Fig.2

Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0702451 A

- JP 2012120297 B